# EUROPÄISCHE PATENTSCHRIFT

(11) **EP 2 688 753 B1**
(45) Veröffentlichungstag und Bekanntmachung des Hinweises auf die Patenterteilung: **28.01.2015**
(21) Anmeldenummer: 12704042.6
(22) Anmeldetag: 09.02.2012
(51) Int. Cl.: B60C 11/01

(54) **FAHRZEUGLUFTREIFEN**
VEHICLE PNEUMATIC TYRE
PNEU DE VÉHICULE

(30) Priorität: 21.03.2011 DE 102011001424
(43) Veröffentlichungstag der Anmeldung: 29.01.2014
(73) Patentinhaber: Continental Reifen Deutschland GmbH, 30165 Hannover (DE)
(72) Erfinder: KLEFFMANN, Jens, 30453 Hannover (DE)
(74) Vertreter: Finger, Karsten
(86) Internationale Anmeldenummer: PCT/EP2012/052167
(87) Internationale Veröffentlichungsnummer: WO 2012/126671

(56) Entgegenhaltungen:
- EP-A2- 0 934 835
- JP-A- 2004 009 999
- JP-A- 2004 066 837

## Beschreibung

Die Erfindung betrifft einen Fahrzeugluftreifen für Nutzfahrzeuge mit einem Laufstreifenprofil, welches sich in axialer Richtung A des Fahrzeugluftreifens zwischen zwei Reifenschultern erstreckt, in welchen jeweils ein über den Umfang des Fahrzeugluftreifens erstreckt ausgebildetes Schulterprofilband ausgebildet ist, das in axialer Richtung A zur Äquatorebene Ä des Reifens hin durch eine über den Umfang des Fahrzeugluftreifens erstreckte Rille und auf seiner von der Äquatorebene Ä wegweisenden Seite jeweils von einer Oberfläche der Reifenseitenwand begrenzt wird, welche die von der Äquatorebene wegweisende Flanke des Schulterprofilbandes bildet, wobei das Laufstreifenprofil in den die Reifenachse beinhaltenden Schnittebenen von einer die Straßenkontaktoberfläche bildenden Oberfläche begrenzt wird, die zwischen den Schulterprofilbändern eine zum Reifen hin gekrümmte Oberflächenkonturlinie bildet.

Derartige Fahrzeugluftreifen für Nutzfahrzeuge sind bekannt. Bei derartigen Reifen bildet Außenkonturzug in den Querschnittebenen, die die Reifenachse beinhalten, jeweils die Schnittlinienkontur der aus den nach radial außen gerichteten, die Profilrippen bzw. Profilblockelemente von Profilblockreihen begrenzenden Oberflächen gebildeten Mantelfläche. Üblicher Weise erstreckt sich der Außenkonturzug ausgehend von der Schnittlinie der einen Reifenseitenwand des Reifen mit der nach radial außen gerichteten Oberfläche des zu dieser ersten Reifenseitenwand weisenden Schulterbandes bis zur Schnittlinie der anderen Reifenseitenwand mit der nach radial außen gerichteten Oberfläche des zu dieser zweiten Reifenseitenwand hinweisenden Schulterbandes stetig leicht gekrümmt.

Es ist bekannt bei derartigen Nutzfahrzeugluftreifen durch Reduktion der Profiltiefe über die gesamte Erstreckung des Laufstreifenprofils eine Reduzierung des Rollwiderstands zu ermöglichen, jedoch zu Lasten der Abriebeigenschaften des Nutzfahrzeugluftreifens .

Es ist auch bekannt, lediglich das Schulterprofilband über seine gesamte in axialer Richtung A des Reifens gebildete Breitenerstreckung hinweg mit einer reduzierten Profiltiefe gegenüber den zwischen den Schulterprofilbändern ausgebildeten Profilbändern auszubilden. Im axialen Erstreckungsbereich der das Schulterprofilband von den benachbarten Profilbändern trennenden Umfangsrille ist hierdurch ein regelrechter Sprung der Oberflächenkontur und der Profiltiefe ausgebildet. Derartige Komplettreduktionen der Profiltiefe im Bereich der Schulterbänder beeinflussen sowohl die Abriebeigenschaften als auch auf den Rollwiderstand negativ.

Aus der deutschen Patentanmeldung DE 10 2009 044 418.1 ist es bekannt zur Reduktion des Rollwiderstandes das Schulterband mit seiner Oberflächenkontur in einem ersten an die trennende Umfangsrille angrenzenden axialen Erstreckungsbereich dem Oberflächenkonturzug des zwischen den Schulterbändern ausgebildeten Laufstreifenprofils folgend bis zu einer Sprungstelle im Schulterband auszubilden, an welcher sprunghaft Oberflächenkontur zu verändert und dabei die Profiltiefe deutlich reduziert wird. Das Schulterband ist ab dieser Sprungstelle mit der in einer reduzierten radialer Position ausgebildeten Oberflächenkontur und mit reduzierter Profiltiefe in einem zweiten axialen Erstreckungsbereich des Schulterbandes bis zur Seitenwand erstreckt ausgebildet. Diese Ausbildung führt bereits zu deutlichen Verbesserungen des Rollwiderstandes. Aufgrund des durch die Materialentnahme deutlich reduzierten Gummimaterials erhöht sich hierdurch der Abrieb geringfügig.

**Aus der** JP 2004 009999 A **ist es bekannt, die Oberflächenkontur eines Fahrzeugluftreifens im Bereich der Reifenschulter im Anschluss an einen ersten, der Reifenkontur folgenden gekrümmten Erstreckungsabschnitt zwischen dem gekrümmten Erstreckungsabschnitt und der Seitenwand aus zwei weiteren in axialer Richtung hintereinander angeordneten und über eine Knickstelle miteinander verbundenen geradlinigen Erstreckungsabschnitten auszubilden.**

Der Erfindung liegt die Aufgabe zugrunde, einen Fahrzeugluftreifen für Nutzfahrzeuge gemäß den Merkmalen des Anspruchs 1 des Oberbegriffes zu schaffen, bei welchem mit einfachen Mitteln sowohl der Rollwiderstand als auch der Abrieb und somit die Laufleistung des Nutzfahrzeugreifens verbessert werden kann.

Die Aufgabe wird erfindungsgemäß durch Ausbildung eines Fahrzeugluftreifens für Nutzfahrzeuge mit einem Laufstreifenprofil, welches sich in axialer Richtung A des Fahrzeugluftreifens zwischen zwei Reifenschultern erstreckt, in welchen jeweils ein über den Umfang des Fahrzeugluftreifens erstreckt ausgebildetes Schulterprofilband ausgebildet ist, das in axialer Richtung A zur Äquatorebene Ä des Reifens hin durch eine über den Umfang des Fahrzeugluftreifens erstreckte Rille und auf seiner von der Äquatorebene Ä wegweisenden Seite jeweils von einer Oberfläche der Reifenseitenwand begrenzt wird, welche die von der Äquatorebene wegweisende Flanke des Schulterprofilbandes bildet, wobei das Laufstreifenprofil in den die Reifenachse beinhaltenden Schnittebenen von einer die Straßenkontaktoberfläche bildenden Oberfläche begrenzt wird, die zwischen den Schulterprofilbändern eine zum Reifen hin gekrümmte Oberflächenkonturlinie bildet, gemäß den Merkmalen von Anspruch 1 gelöst, bei dem die die Straßenkontaktoberfläche bildende Oberfläche in wenigstens einem Schulterprofilband der in axialer Richtung A gemessenen Breite B in einem an die Umfangsrille angrenzenden axialen ersten Erstreckungsabschnitt der Breite a bis zu einer Knickstelle P als die Verlängerung der gekrümmten Oberflächenkonturlinie K in das Schulterprofilband ausgebildet ist und ab der Knickstelle P bis zur Seitenwand in einem axialen zweiten Erstreckungsabschnitt der Breite b mit b < B geradlinig unter Einschluss eines Neigungswinkels α an die an die Oberflächenkonturlinie K in der Knickstelle P ausgebildete Tangente t in radialer Richtung R nach innen geneigt ausgebildet ist mit 3°≤α<25°.

Durch diese Ausbildung wird ermöglicht, dass sowohl der Rollwiderstand als auch der Abrieb und somit die Langlaufleistung des Reifens verbessert werden können. Überraschender Weise hat sich bei Versuchen ergeben, dass hierdurch der Rollwiderstand sogar gegenüber den Ausbildungen mit Schulterprofilbändern mit sprunghaft teilreduzierten Profiltiefen noch weiter verbessert werden kann.

Die relativ geringe gleichmäßige Materialveränderung aufgrund des kleinen Neigungswinkels α im äußeren Schulterbandbereich bewirkt im Einsatz unter Last eine vergleichmäßigte Lastverteilung, optimierte Abriebeigenschaften und hierdurch bedingte optimierte Langlaufeigenschaften des Nutzfahrzeugreifens.

Besonders vorteilhaft ist die Ausbildung eines Fahrzeugluftreifens gemäß den Merkmalen von Anspruch 2, wobei die Breite b des zweiten axialen Erstreckungsabschnitts mit 8mm≤b≤60mm ausgebildet ist. Hierdurch kann in einfacher, wirkungsvoller Weise der Rollwiderstand im Zusammenspiel mit guten Abriebeigenschaften weiter verbessert werden. Bei Ausbildung der Breite b des zweiten axialen Erstreckungsabschnitts mit 12mm≤b≤40mm sind besonders gute Ergebnisse der Rollwiderstand im Zusammenspiel mit guten Abriebeigenschaften umsetzbar.

Besonders vorteilhaft ist die Ausbildung eines Fahrzeugluftreifens gemäß den Merkmalen von Anspruch 3, wobei die maximale Profiltiefe P_{T} in der Umfangsrille mit P_{T} > 9mm ausgebildet ist. Auf diese Weise ist die bei NFZ-Reifen übliche hohe Laufleistung einfach umsetzbar.

Besonders vorteilhaft ist die Ausbildung eines Fahrzeugluftreifens gemäß den Merkmalen von Anspruch 4, wobei das Profilband als Profilrippe ausgebildet ist.

Besonders vorteilhaft ist die Ausbildung eines Fahrzeugluftreifens gemäß den Merkmalen von Anspruch 5, wobei das Profilband als Profilblockreihe ausgebildet ist. Hierdurch können zusätzlich Traktions - und Nassgriffeigenschaften verbessert werden.

Besonders vorteilhaft ist die Ausbildung eines Fahrzeugluftreifens gemäß den Merkmalen von Anspruch 6, wobei der Fahrzeugluftreifen für den Einsatz auf der Antriebsachse eines Nutzfahrzeuges ausgebildet ist. Gerade hier ist die Abrieb- und Rollwiderstandsreduzierende Wirkung besonders effektiv, da gerade beim Einsatz eines Fahrzeugluftreifens auf der Antriebsachse sind die anliegenden Antriebsmomente an der Laufflächenoberfläche für die Abriebgeschwindigkeit von wesentlicher Bedeutung ist.

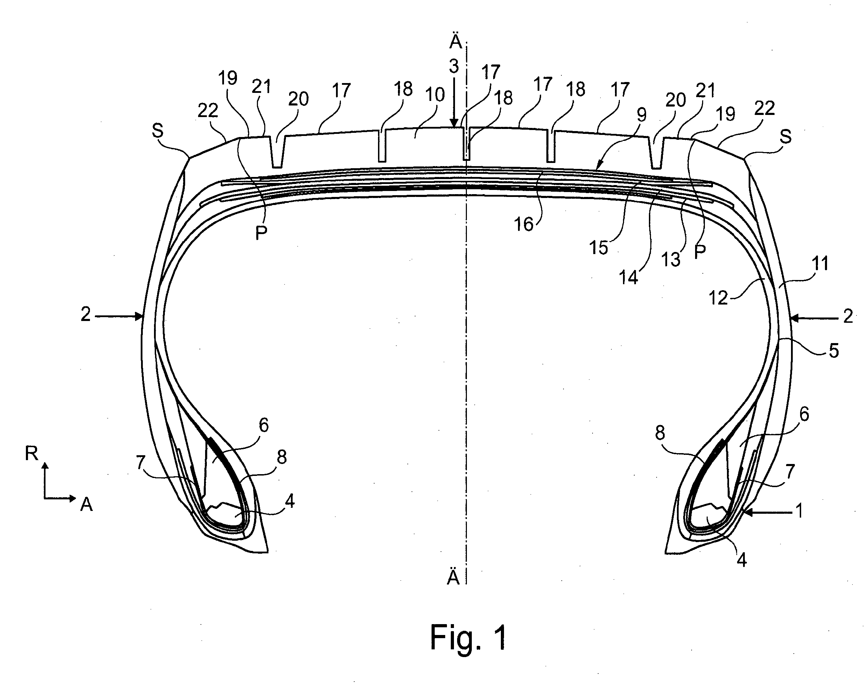

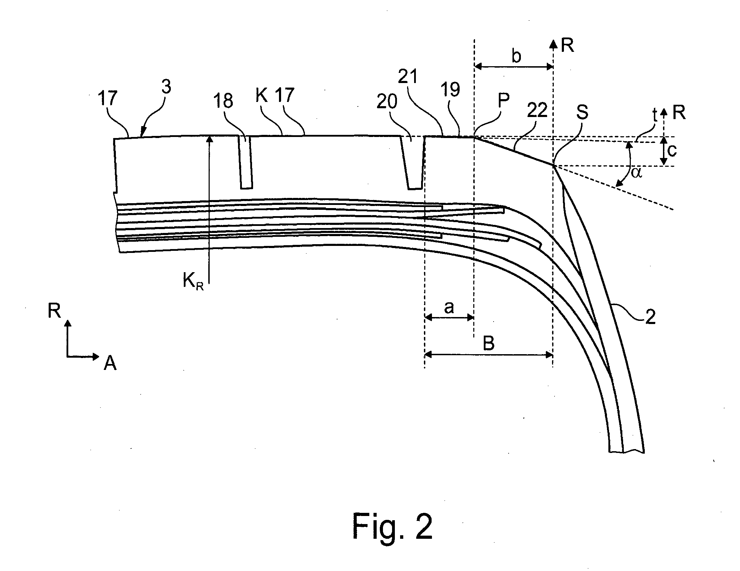

Die Erfindung ist im Folgenden an Hand der in den Figuren 1 und 2 dargestellten Ausführungsbeispiele am Beispiel eines Fahrzeugluftreifens radialer Bauart für die Antriebsachse eines Nutzfahrzeuges näher erläutert. Darin zeigen
- Fig. 1: einen durch die Reifenachse gebildeten Querschnitt eines Nutzfahrzeugluftreifens,
- Fig. 2: vergrößerte Darstellung des Schulterabschnitts des Nutzfahrzeugluftreifens von Fig.1 in Querschnittsdarstellung.

Fig. 1 und Fig.2 zeigen einen Nutzfahrzeugluftreifen radialer Bauart für die Antriebsachse eines Nutzfahrzeuges mit zwei in radialer Richtung R des Fahrzeugreifens erstreckten Seitenwänden 2 und einem axial dazwischen ausgebildeten Kronenbereich 3. Die Seitenwände sind an ihrem in radialer Richtung nach innen weisenden Erstreckungsende jeweils mit einem Wulstbereich 1 ausgebildet in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung entlang des radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 6. Die Karkasse 5 ist in bekannter nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden - , welche sich im Bereich der Seitenwände 2 im Wesentlichen in radialer Richtung R und im Kronenbereich 3 im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Materialstreifen.

Im Bereich der Reifenkrone 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher mit bekannter Vierlagenanordnung aus vier in radialer Richtung R übereinander und aufeinanderliegend angeordneten Gürtellagen 13, 14, 15 und 16 bekannter Art ausgebildet ist. Die Gürtellagen 13,14,15 und 16 sind jeweils in bekannter Weise aus in Kautschuk eingebetteten Stahlkorden oder anderen zur Herstellung von Gürtellagen von Nutzfahrzeugreifen geeigneten bekannten Festigkeitsträgern hergestellt. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Das Laufstreifenprofil 3 ist in den beiden Reifenschultern aus jeweils einem radial erhabenen, eine Schulterband bildenden Profilband 19 ausgebildet. Die beiden Profilbänder 19 sind über den gesamten Umfang des Fahrzeugluftreifens erstreckt und in Umfangsrichtung U des Fahrzeugluftreifens ausgerichtet ausgebildet. Zur Äquatorebene Ä des Fahrzeugluftreifens hin wird das Profilband 19 jeweils durch eine über den gesamten Umfang des Fahrzeugluftreifens erstreckte und in Umfangsrichtung U ausgerichtete Umfangsrille 20 begrenzt. Zwischen den beiden Umfangsrillen 20 ist das Laufstreifenprofil 3 aus mehreren in axialer Richtung A des Fahrzeugluftreifens nebeneinander angeordneten, jeweils über den gesamten Umfang des Fahrzeugluftreifens erstreckten und in Umfangsrichtung ausgerichteten Profilbändern 17 ausgebildet. Benachbarte Profilbänder 17 dieses zentralen zwischen den Umfangsrillen 20 ausgebildeten Erstreckungsbereiches sind jeweils in axialer Richtung A des Fahrzeugluftreifens durch eine Umfangsrille 18, welche sich über den gesamten Umfang des Fahrzeugluftreifens erstreckt und in Umfangsrichtung ausgerichtet ist, voneinander beabstandet. Im dargestellten Ausführungsbeispiel von Fig. 1 sind zwischen den beiden den jeweiligen Schulterbereich vom zentralen Erstreckungsabschnitt des Laufstreifenprofils 3 trennenden Umfangsrillen 20 vier Profilbänder 17 ausgebildet, welche den zentralen Erstreckungsbereich bilden.

Die Umfangsrille 20 bildet dabei jeweils mit ihrer zum angrenzenden Profilband 19 gerichteten Rillenwand, die das Profilband 19 zur Äquatorebene Ä hin begrenzende Flanke des Profilbandes 19.

Die nach axial außen weisende Oberfläche der in Fig. 1 auf der linken Seite dargestellten Reifenseitenwand 2 des Fahrzeugluftreifens bildet in ihrer Verlängerung die das in der linken Reifenschulter ausgebildeten Profilband 19 zu der von der Äquatorebene Ä wegweisenden Seite hin begrenzende Flanke des Profilbands 19 und erstreckt sich bis zu der das Profilband 19 in radialer Richtung nach außen begrenzenden Oberfläche, welche sie in den die Reifenachse beinhaltenden Querschnittebenen im Schnittpunkt S schneidet.

Ebenso bildet die nach axial außen weisende Oberfläche der in Fig. 1 auf der rechten Seite dargestellte Reifenseitenwand 2 in ihrer radialen Verlängerung, die das in der rechten Reifenschulter ausgebildeten Profilband 19 zu der von der Äquatorebene Ä wegeweisenden Seite hin begrenzende Flanke dieses Profilbandes 19 und erstreckt sich bis zu der dieses Profilband 19 in radialer Richtung nach außen begrenzenden Oberfläche, welche sie in den die Reifenachse beinhaltenden Querschnittebenen im Schnittpunkt S schneidet.

Die Profilbänder 17 des zentralen Erstreckungsbereiches zwischen den Umfangsrillen 20 sind in radialer Richtung nach außen mit ihrer die Straßenkontaktoberfläche bildenden radial äußeren Oberfläche begrenzt, welche in den die Reifenachse beinhaltenden Querschnittebenen in ihrer Verlängerung über die Umfangsrillen 18 hinweg als Teil der Mantelfläche des Laufstreifenprofils die Oberflächenkonturline K zwischen den Umfangsrillen 20 bildet. Die in radialer Richtung R des Reifens nach außen weisende Oberfläche der Profilbänder 19 ist in einem ersten jeweils unmittelbar an die Umfangsrille 20 angrenzenden axialen Erstreckungsbereich 21 der in axialer Richtung A gemessenen Erstreckungsbreite a in den Querschnittebenen, die die Reifenachse beinhalten, jeweils mit ihrer Außenkonturlinie als Verlängerung der Oberflächenkonturlinie K des zentralen Erstreckungsabschnitts über die Umfangsrille 20 hinweg bis zu einem im Abstand a von der Umfangsrille 20 ausgebildeten Knickpunkt P ausgebildet.

Die Oberflächenkonturlinie K ist zwischen dem Knickpunkt P der rechten Reifenschulter und dem Schnittpunkt P der linken Reifenschulter stetig verlaufend mit leichter Krümmung mit Krümmungsradius K_{R} zum Reifeninnern hin gekrümmt ausgebildet.

Ab dem Knickpunkt P ist die radial äußere Oberfläche des Profilbandes 19 in einem zweiten axialen Erstreckungsbereich 22 bis zum Schnittpunkt S des Profilbandes 19 geradlinig verlaufend unter Einschluss eines Neigungswinkels α zu der im Knickpunkt P an die Oberflächenkonturlinie K des Erstreckungsbereichs 21 ausgebildeten Tangente verlaufend ausgebildet.

Dieser zweite Erstreckungsbereich 22 erstreckt sich über eine in axialer Richtung A gemessene Erstreckungsbreite b zwischen dem Knickpunkt P und der dem Schnittpunkt S des Profilbandes 19.

Wie in Fig.2 zu erkennen, ist die die radial äußere Oberfläche mit ihrer Oberflächenkonturlinie im Erstreckungsbereich 22 dabei ausgehend vom Knickpunkt P nach axial außen bis zum Schnittpunkt S nach radial innen hin geneigt ausgebildet, d.h. die radiale Position der Oberflächenkonturlinie im Erstreckungsbereich 22 nimmt ausgehend vom Punkt P bis zum Punkt S des Profilbandes 19 hin kontinuierlich ab.

Wie in den Figuren 1 und 2 zur erkennen ist, erstreckt sich der Gürtel 9 des Fahrzeugluftreifens in axialer Richtung bis in den axialen Erstreckungsbereich der Breite B der radial äußeren Oberfläche des jeweiligen Profilbandes 19 hinein und endet dort.

Der Neigungswinkel α ist mit 3° ≤ α ≤ 25° ausgebildet. Besonders wirkungsvoll ist die Ausbildung mit einem Neigungswinkel 5° ≤ α ≤ 15°. Im dargestellten Ausführungsbeispiel ist α= 11° gewählt.

Die Erstreckungsbreite B ist mit B=(a + b) mit a > 0mm und mit b < B ausgebildet.

Die Erstreckungslänge b ist mit 8mm ≤ b ≤ 60mm ausgebildet. Es hat sich als besonders vorteilhaft erwiesen, die Erstreckungslänge b mit 12mm ≤ b ≤ 40mm auszubilden. In den üblichen Reifengrößen für Nutzfahrzeuge ist eine Ausbildung von b mit 15mm ≤ b ≤ 25mm besonders sinn- und wirkungsvoll.

Es hat sich als besonders vorteilhaft erwiesen, die Erstreckungslänge a mit a≥5mm auszubilden.

Wie in Fig. 2 dargestellt ist, ist der Schnittpunkt S radial innerhalb der Position des Knickpunktes P in einem in radialer Richtung R gemessenen Abstand c vom Knickpunkt P ausgebildet.

Im dargestellten Ausführungsbeispiel ist α = 11°, b = 20mm und c = 4mm gewählt.

Die Profilbänder 17 des zentralen Erstreckungsbereiches sind als Umfangsrippen bekannter Art oder als Umfangsprofilblockreihen aus über den Umfang des Fahrzeugluftreifens hintereinander angeordneten und jeweils durch Querrillen voneinander getrennten Profilblockelementen bekannter Art ausgebildet. Dabei sind in einer Ausführung alle Profilbänder 17 als Profilrippen ausgebildet. In einer anderen Ausführung sind alle Profilbänder 17 als Profilblockreihen ausgebildet. In einer weiteren Ausführung sind nur einige der Profilbänder 17 als Profilrippen und die anderen Profilbänder 17 als Profilblockreihen ausgebildet.

Die Schulterprofilbänder 19 sind in einer Ausführung als Umfangsrippen ausgebildet, welche sich über den gesamten Umfang des Fahrzeugluftreifens erstrecken. In einer anderen Ausführung sind die Schulterprofilbänder 19 als Schulterprofilblockreihen mit in Umfangsrichtung des Fahrzeugluftreifens hintereinander angeordneten und jeweils durch Querrillen voneinander beabstandeten Profilblockelementen bekannter Art ausgebildet. In einer anderen Ausführung ist das eine Schulterprofilband 19 als Profilrippe und das andere Schulterprofilrippe als Schulterprofilblockreihe ausgebildet.
Die Schulterprofilbänder 19 sind auf ihrer in radialer Richtung R nach außen gerichteten Oberfläche in einer Ausführung zumindest teilweise mit Feineinschnitten bekannter Art versehen.

Die maximale Profiltiefe P_{T} in der Umfangsrille 20 ist mit P_{T} > 9mm ausgebildet.

### Bezugszeichenliste

### (Teil der Beschreibung)

- 1: Wulstbereich
- 2: Seitenwand
- 3: Kronenbereich
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage
- 14: Gürtellage
- 15: Gürtellage
- 16: Gürtellage
- 17: Profilband
- 18: Umfangsrille
- 19: Schulterprofilband
- 20: Umfangsrille
- 21: Erster Erstreckungsbereich
- 22: Zweiter Erstreckungsbereich

## Patentansprüche

1. Fahrzeugluftreifen für Nutzfahrzeuge mit einem Laufstreifenprofil, welches sich in axialer Richtung A des Fahrzeugluftreifens zwischen zwei Reifenschultern erstreckt, in welchen jeweils ein über den Umfang des Fahrzeugluftreifens erstreckt ausgebildetes Schulterprofilband (19) ausgebildet ist, das in axialer Richtung A zur Äquatorebene Ä des Reifens hin durch eine über den Umfang des Fahrzeugluftreifens erstreckte Rille (20) und auf seiner von der Äquatorebene Ä wegweisenden Seite jeweils von einer Oberfläche der Reifenseitenwand (2) begrenzt wird, welche die von der Äquatorebene Ä wegweisende Flanke des Schulterprofilbandes (19) bildet, wobei das Laufstreifenprofil in den die Reifenachse beinhaltenden Schnittebenen von einer die Straßenkontaktoberfläche bildenden Oberfläche begrenzt wird, die zwischen den Schulterprofilbändern (19) eine zum Reifen hin gekrümmte Oberflächenkonturlinie K bildet,
**dadurch gekennzeichnet,**
**dass** die die Straßenkontaktoberfläche bildende Oberfläche in wenigstens einem Schulterprofilband (19) der in axialer Richtung A gemessenen Breite B, in einem an die Umfangsrille (20) angrenzenden axialen ersten Erstreckungsabschnitt (21) der Breite a, bis zu einer Knickstelle P als die Verlängerung der gekrümmten Oberflächenkonturlinie K in das Schulterprofilband (19) ausgebildet ist und ab der Knickstelle P bis zur Seitenwand (2), in einem axialen zweiten Erstreckungsabschnitt (22) der Breite b mit b < B, geradlinig unter Einschluss eines Neigungswinkels α an die an die Oberflächenkonturlinie K in der Knickstelle P ausgebildete Tangente t in radialer Richtung R nach innen geneigt ausgebildet ist mit 3°<α<25°.

2. Fahrzeugluftreifen gemäß den Merkmalen von Anspruch 1,
wobei die Breite b des zweiten axialen Erstreckungsabschnitts (22) mit 8mm≤b≤60mm - insbesondere mit 12mm≤b≤40mm - ausgebildet ist.

3. Fahrzeugluftreifen gemäß den Merkmalen von Anspruch 1 oder 2,
wobei die maximale Profiltiefe P_{T} in der Umfangsrille mit P_{T} > 9mm ausgebildet ist.

4. Fahrzeugluftreifen gemäß den Merkmalen von einem oder mehreren der vorangegangenen Ansprüche,
wobei das Profilband (19) als Profilrippe ausgebildet ist.

5. Fahrzeugluftreifen gemäß den Merkmalen von einem oder mehreren der Ansprüche 1 bis 3,
wobei das Profilband (19) als Profilblockreihe ausgebildet ist.

6. Fahrzeugluftreifen gemäß den Merkmalen von einem oder mehreren der vorangegangenen Ansprüche,
wobei der Fahrzeugluftreifen für den Einsatz auf der Antriebsachse eines Nutzfahrzeuges ausgebildet ist.

## Claims

1. Vehicle pneumatic tyre for commercial vehicles, having a tread profile, which extends in the axial direction A of the vehicle pneumatic tyre between two tyre shoulders, in each of which a shoulder profile band (19) is formed so as to be extended over the circumference of the vehicle pneumatic tyre, said shoulder profile band (19) being bounded toward the equatorial plane Ä of the tyre in the axial direction A by a groove (20) extended over the circumference of the vehicle pneumatic tyre and, on the side of said band which is remote from the equatorial plane Ä, in each case being bounded by a surface of the tyre side wall (2), said surface forming the flank of the shoulder profile band (19) remote from the equatorial plane Ä, wherein the tread profile is bounded in the section planes containing the tyre axis by a surface which forms the road contact surface, which, between the shoulder profile bands (19), forms a surface contour line K that is curved toward the tyre,
**characterized**
**in that**, in at least one shoulder profile band (19) of width B, measured in the axial direction A, the surface forming the road contact surface is formed as the prolongation of the curved surface contour line K into the shoulder profile band (19) in an axial first section (21) of extent of width a adjoining the circumferential groove (20), up to a point P of inflection, and, in an axial second section (22) of extent of width b, where b < B, starting from the point P of inflection up to the side wall (2), is formed in a linear fashion with an inward slope in radial direction R enclosing an angle α of inclination with respect to the tangent t to the surface contour line K at the point P of inflection, where 3° ≤ α ≤ 25°.

2. Vehicle pneumatic tyre according to the features of claim 1,
wherein the width b of the second axial section (22) of extent is designed to be 8 mm ≤ b ≤ 60 mm - in particular 12 mm ≤ b ≤ 40 mm.

3. Vehicle pneumatic tyre according to the features of claim 1 or 2, wherein the maximum profile depth P_{T} in the circumferential groove is designed to be P_{T} > 9mm .

4. Vehicle pneumatic tyre according to the features of one or more of the preceding claims, wherein the profile band (19) is designed as a profile rib.

5. Vehicle pneumatic tyre according to the features of one or more of claims 1 to 3, wherein the profile band (19) is designed as a profile block row.

6. Vehicle pneumatic tyre according to the features of one or more of the preceding claims,
wherein the vehicle pneumatic tyre is designed for use on the driven axle of a commercial vehicle.

## Revendications

1. Pneumatique de véhicule pour véhicules utilitaires comprenant un profil de bande de roulement qui s'étend dans la direction axiale A du pneumatique de véhicule entre deux épaulements de pneu, dans lesquels est réalisée à chaque fois une bande profilée d'épaulement (19) réalisée de manière à s'étendre sur la périphérie du pneumatique de véhicule, laquelle est limitée dans la direction axiale A vers le plan équatorial Ä du pneu par une gorge (20) s'étendant sur la périphérie du pneumatique de véhicule et sur son côté opposé au plan équatorial Ä à chaque fois par une surface de la paroi latérale du pneu (2), qui forme les flancs de la bande profilée d'épaulement (19) opposés au plan équatorial Ä, le profil de bande de roulement étant limité dans les plans de coupe contenant l'axe du pneu par une surface formant la surface de contact avec la route, qui forme, entre les bandes profilées d'épaulement (19), une ligne de contour de surface courbée vers le pneu K,
**caractérisé en ce que**
la surface formant la surface de contact avec la route, dans au moins une bande profilée d'épaulement (19) de largeur B mesurée dans la direction axiale A, dans une première portion d'étendue axiale (21) de largeur a adjacente à la gorge périphérique (20), est réalisée jusqu'à un point d'inflexion P sous forme de prolongement de la ligne de contour de surface courbée K dans la bande profilée d'épaulement (19), et à partir du point d'inflexion P jusqu'à la paroi latérale (2), dans une deuxième portion d'étendue axiale (22) de largeur b avec b < B, est réalisée de manière inclinée vers l'intérieur dans la direction radiale R en ligne droite en formant un angle d'inclinaison α au niveau de la tangente t réalisée au niveau de la ligne de contour de surface K dans le point d'inflexion P, avec 3° ≤ α ≤ 25°.

2. Pneumatique de véhicule selon les caractéristiques de la revendication 1, dans lequel la largeur b de la deuxième portion d'étendue axiale (22) est réalisée avec 8 mm ≤ b ≤ 60 mm, en particulier avec 12 mm ≤ b ≤ 40 mm.

3. Pneumatique de véhicule selon les caractéristiques de la revendication 1 ou 2,
dans lequel la profondeur de profilé maximale P_{T} dans la gorge périphérique est réalisée avec P_{T} > 9 mm.

4. Pneumatique de véhicule selon les caractéristiques d'une ou plusieurs des revendications précédentes,
dans lequel la bande profilée (19) est réalisée sous forme de nervure profilée.

5. Pneumatique de véhicule selon les caractéristiques d'une ou plusieurs des revendications 1 à 3,
dans lequel la bande profilée (19) est réalisée sous forme de rangée de blocs profilés.

6. Pneumatique de véhicule selon les caractéristiques d'une ou plusieurs des revendications précédentes,
dans lequel le pneumatique de véhicule est réalisé pour l'utilisation sur l'essieu moteur d'un véhicule utilitaire.
